# EUROPEAN PATENT SPECIFICATION

(11) **EP 4 250 210 B1**
(45) Date of publication and mention of the grant of the patent: **16.10.2024**
(21) Application number: 22164547.6
(22) Date of filing: 25.03.2022
(51) Int. Cl.: G06F 21/35, G06F 21/62, G06Q 20/32, G06Q 20/38, G06Q 20/40, H04L 9/40, G06Q 30/06, G06Q 20/20

(54) **DEVICES, METHODS AND A SYSTEM FOR SECURE ELECTRONIC PAYMENT TRANSACTIONS**
VORRICHTUNGEN, VERFAHREN UND SYSTEM FÜR SICHERE ELEKTRONISCHE BEZAHLTRANSAKTIONEN
DISPOSITIFS, PROCÉDÉS ET SYSTÈME DE TRANSACTIONS DE PAIEMENTS ÉLECTRONIQUES SÉCURISÉES

(43) Date of publication of application: 27.09.2023
(73) Proprietor: Rubean AG, 81379 München (DE)
(72) Inventor: SPITZ, Stephan, 85757 Karlsfeld (DE)
(74) Representative: Patentship Patentanwaltsgesellschaft mbH

(56) References cited:
- EP-A1- 3 364 357
- WO-A1-2012/175606
- WO-A1-2018/234882

## Description

### TECHNICAL FIELD

The invention relates to electronic payment transactions. More specifically, the invention relates to devices, methods and a system for enabling secure electronic payment transactions involving a mobile merchant communication device, in particular a merchant mobile phone.

### BACKGROUND OF THE INVENTION

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Due to the widespread adoption of mobile phones, tablet computers and other types of COTS (commercial-off-the-shelf) devices in more and more electronic payment transactions POS terminals are being replaced, for instance, by mobile phones in that for processing a payment transaction a merchant mobile phone interacts with a payment card and/or a mobile phone of the customer. Often the authorization of the payment transaction requires the customer to enter a PIN or the like, i.e. security relevant data of the customer, into a virtual or physical PIN pad of the merchant mobile phone. Therefore, it has to be ensured that the security relevant data of the customer for authorizing the payment transaction are processed by the merchant mobile phone in a secure manner, i.e. that the security status of the merchant mobile phone is integer and the merchant can be trusted.

EP 3 364 357 A1 discloses a method for registering a mobile POS.

### SUMMARY OF THE INVENTION

It is an object of the invention to provide improved devices, methods and a system for enabling secure electronic payment transactions involving a mobile merchant communication device, in particular a merchant mobile phone.

The foregoing and other objects are achieved by the subject matter of the independent claims. Further implementation forms are apparent from the dependent claims, the description and the figures.

According to a first aspect a mobile merchant communication device is provided, wherein the mobile merchant communication device is configured to be enrolled by a personalization server for performing a payment transaction with a mobile consumer communication device using a payment server. The mobile merchant communication device may be, for instance, a mobile phone, a tablet computer or another type of COTS device of a merchant.

The mobile merchant communication device comprises a user interface configured to receive an authentication request from a merchant, wherein the authentication request comprises a first electronic secret, in particular a human-readable secret, such as a PIN. The mobile merchant communication device further comprises a security enclave configured to, in response to the authentication request, obtain a second electronic secret, in particular an electronic key, for the mobile merchant communication device and a communication interface configured to transmit an enrollment request to the personalization server, wherein the enrollment request comprises the first electronic secret and the second electronic secret. The communication interface is further configured, in response to the enrollment request, to receive personalization data from the personalization server, wherein the personalization data enables the mobile merchant communication device to perform the payment transaction with the mobile consumer communication device. The enrollment process implemented by the personalization server allows having a better control about the mobile merchant communication devices allowed to make payment transactions.

In a further embodiment, the security enclave comprises a hardware security enclave and/or a software security enclave implemented by a processing circuitry of the mobile merchant communication device.

In a further embodiment, the security enclave is further configured to store the second electronic secret and/or the personalization data.

In a further embodiment, the personalization data comprises one or more cryptographic keys, in particular one or more symmetric keys, for enabling the mobile merchant communication device to perform the payment transaction with the mobile consumer communication device. Thus, in an embodiment, only by means of the one or more symmetric keys the mobile merchant communication device will be able to perform the payment transaction with the mobile consumer communication device, which may further involve an interaction with a payment server.

In a further embodiment, the communication interface is configured to receive the personalization data from the personalization server in encrypted form and wherein the security enclave is configured to decrypt the personalization data. In an embodiment, the personalization server may share the personalization data securely with the payment server.

In a further embodiment, the security enclave is further configured to verify a digital signature of the personalization data using a public key of the personalization server. In a further embodiment, the first electronic secret is a human-readable PIN, which may be transmitted to the merchant and/or the mobile merchant communication device via a secure channel, such as secure email, paper letter, secure text message and the like.

In a further embodiment, the security enclave is configured to generate the second electronic secret based on the first electronic secret. For instance, in an embodiment, the first electronic seed may be a seed value for a secret generation mechanism implemented by the mobile merchant communication device, in particular the security enclave, for generating the second electronic secret. In a further embodiment, the second electronic secret may be generated before transmitting the first electronic secret.

In a further embodiment, the second electronic secret is a public key of the mobile merchant communication device with the corresponding private key of the mobile merchant communication device securely stored in the memory of the mobile merchant communication device.

In a further embodiment, the security enclave is further configured to perform the payment transaction with the mobile consumer communication device and the payment server based on the personalization data.

According to a second aspect an electronic payment system is provided, wherein the electronic payment system comprises a mobile merchant communication device according to the first aspect and a personalization server configured to enroll the mobile merchant communication device for performing a payment transaction with a mobile consumer communication device.

In a further embodiment, the electronic payment system further comprises a payment server, wherein the payment server is configured to authorize the payment transaction between the mobile merchant communication device and the mobile consumer communication device based on the personalization data shared by the personalization server.

According to a third aspect a method of enrolling a mobile merchant communication device with a personalization server for performing a payment transaction with a mobile consumer communication device is provided. The method comprises the steps of: receiving an authentication request from a merchant, wherein the authentication request comprises a first electronic secret;
obtaining by a security enclave, in response to receiving the authentication request, a second electronic secret for the mobile merchant communication device;
transmitting an enrollment request to the personalization server, wherein the enrollment request comprises the first electronic secret and the second electronic secret; and
receiving, in response to transmitting the enrollment request, personalization data from the personalization server, wherein the personalization data enables the mobile merchant communication device to perform the payment transaction with the mobile consumer communication device.

In an embodiment, the method further comprises performing the payment transaction with the mobile consumer communication device and a payment server based on the personalization data.

The method according to the third aspect of the present invention can be performed by the mobile merchant communication device according to the first aspect of the present invention. Thus, further features of the method according to the third aspect of the present invention result directly from the functionality of the mobile merchant communication device according to the first aspect of the present invention as well as its different embodiments described above and below.

According to a fourth aspect, a computer program product comprising a non-transitory computer-readable storage medium for storing program code which causes a computer or a processor to perform the method according to the third aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including a mobile merchant communication device according to an embodiment for being enrolled by a personalization server;
Fig. 2a shows a signaling diagram illustrating a process flow implemented by the electronic payment system of figure 1 according to an embodiment;
Fig. 2b shows a signaling diagram illustrating a process flow implemented by the electronic payment system of figure 1 according to a further embodiment; and
Fig. 3 shows a flow diagram illustrating steps of a method according to an embodiment for enrolling a merchant mobile communication device.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

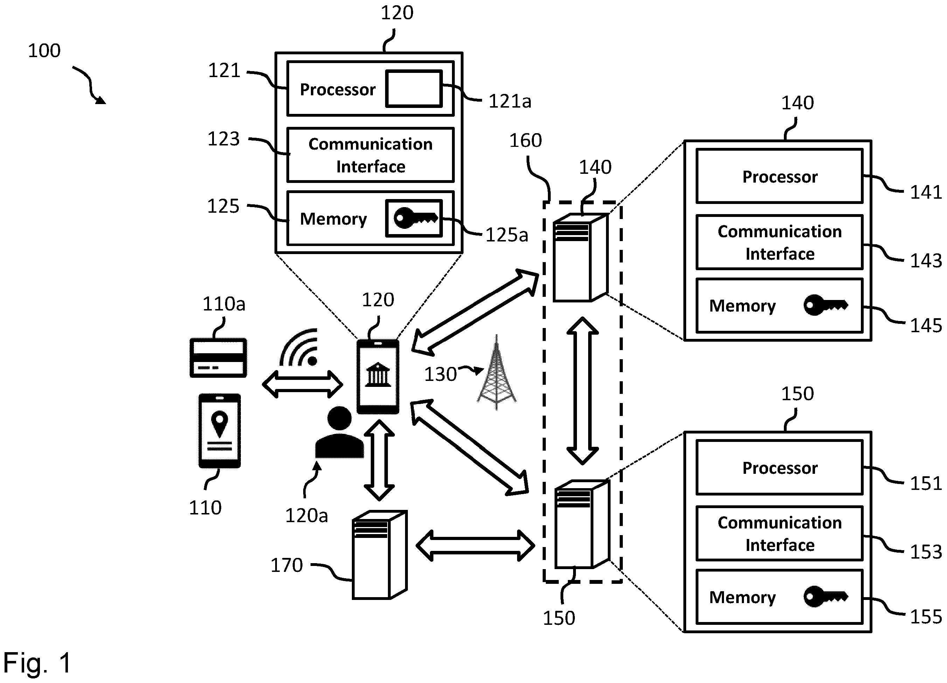

Figure 1 shows a schematic diagram illustrating an electronic payment system 100 according to an embodiment for processing an electronic payment transaction between a mobile merchant communication device 120 operated by a merchant 120a and a customer payment device. The mobile merchant communication device 120 may be, for instance, a mobile phone, tablet computer or the like operated by the merchant 120a. As illustrated in figure 1, the mobile merchant communication device 120 may comprise a processor 121 for processing data, a communication interface 123 for communicating with the other components of the electronic payment system 100 via a communication network 130 and a memory 125 for storing data, in particular cryptographic keys which may be stored in a secure area 125a of the memory 125. The mobile merchant communication device 120 may further comprise a user interface, such as a physical or virtual PIN pad allowing the customer to enter data, such as a secret PIN for authorizing the payment transaction. The customer payment device may be an electronic chip card, i.e. a payment card 110a of a customer, or a mobile customer communication device 110, e.g. a mobile phone 110 of the customer. In an embodiment, the communication interface 123 of the mobile merchant communication device 120 may comprise an NFC interface for communicating with the mobile customer communication device 110. Alternatively or additionally, the mobile merchant communication device 120 and/or the mobile customer communication device 110 may comprise a camera for scanning a QR code for processing the payment transaction.

In addition to the mobile merchant communication device 120 and the mobile customer communication device 110 the electronic payment system 100 illustrated in figure 1 further comprises a personalization server 140 for enrolling the mobile merchant communication device 120 for enabling the mobile merchant communication device 120 to perform the payment transaction with the mobile consumer communication device 110 and a payment server 170. In the embodiment shown in figure 1, the electronic payment system 100 further comprises an attestation server 150 with a processing circuitry 151 and a communication interface 153, which processing circuitry 151 is configured, once the mobile merchant communication device 120 has been enrolled by the personalization server 140, to periodically or intermittently verify via the communication interface 153 that the mobile merchant communication device 120 has been enrolled. As illustrated in figure 1, the personalization server 140 and the attestation sever 150 may be part of a backend system 160 for personalizing/enrolling and monitoring the mobile merchant communication device 120.

As illustrated in figure 1, the mobile merchant communication device 120 comprises a user interface configured to receive an authentication request from a merchant 120a. The authentication request comprises a first electronic secret, in particular a human-readable secret. In an embodiment, the merchant 120a may enter the first human-readable secret via a virtual keypad of the mobile merchant communication device 120.

The mobile merchant communication device 120 further comprises a security enclave 121a, which may be implemented by a processor 121 of the mobile merchant communication device 120. The security enclave 121a is configured to, in response to the authentication request, obtain a second electronic secret, in particular an electronic key (also referred to as cryptographic key), for the mobile merchant communication device 120. The mobile merchant communication device 120 further comprises a communication interface 123 configured to transmit an enrollment request to the personalization server 140, wherein the enrollment request comprises the first electronic secret and the second electronic secret. The communication interface 123 is further configured, in response to the enrollment request, to receive personalization data from the personalization server 140, wherein the personalization data enables the mobile merchant communication device 120 to perform the payment transaction with the mobile consumer communication device 110.

Likewise, the personalization server 140 may comprise a processing circuitry 141 configured to generate the first electronic secret, in particular a human-readable secret, for the mobile merchant communication device 120 and a communication interface 143 configured to receive the enrollment request from the mobile merchant communication device 120. The processing circuitry 141 may be further configured, if the enrollment request is successful, to generate the personalization data for the mobile merchant communication device 120. The communication interface 143 may be further configured to transmit the personalization data to the mobile merchant communication device 120.

In an embodiment, the security enclave 121a comprises a hardware security enclave 121a and/or a software security enclave 121a implemented by the processing circuitry 121 of the mobile merchant communication device 120. In an embodiment, the security enclave 121a may be implemented using virtualization techniques. In an embodiment, the security enclave 121a may use a different partition of a RAM of the mobile merchant communication device 120 and/or data access using "memory mapped I/O". As will be appreciated, the main purpose of the security enclave 121a is to isolate the processing of security critical tasks from standard processing tasks of the mobile merchant communication device 120. This can be achieved by using a single processor-core 121 having two execution modes, one secure mode and another mode for standard processes. In this case the RAM and registers assigned to the single core are duplicated and one set is assigned to the normal mode and the other set to the secure execution mode. According to another embodiment, the security enclave 121a may be implemented using a multi-processor-core architecture with at least one secure-core with an own RAM, which is dedicated to executing only security-critical processes.

In an embodiment, the security enclave 121a is further configured to store the second electronic secret and/or the personalization data. Thus, in an embodiment, the secure area 125a of the memory 125 may be part or under the control of the security enclave 121a.

In an embodiment, the processing circuitry 141 is configured to generate the first electronic secret, in particular human-readable secret, and to trigger a transmission of the first electronic secret to the merchant 120a operating the mobile merchant communication device 120. In an embodiment, once generated, the human-readable first secret may be transmitted to the merchant 120a and/or the mobile merchant communication device 120 via a secure channel, such as secure email, paper letter, secure text message and the like so that the merchant 120a may enroll the mobile merchant communication device 120 using the human-readable first secret.

In an embodiment, the personalization server 140 further comprises a memory 145 configured to store the second electronic secret, in particular an electronic key, generated by the mobile merchant communication device 120 for identifying the mobile merchant communication device 120. The personalization server 140 may be configured to share the second electronic secret, in particular the electronic key, with the attestation server 150, which may be configured to store the second electronic secret in a memory 155 of the attestation server 150.

In an embodiment, the personalization data comprises one or more cryptographic keys, in particular one or more symmetric keys, for enabling the mobile merchant communication device 120 to perform the payment transaction with the mobile consumer communication device 110.

In an embodiment, the communication interface 143 is configured to transmit the personalization data to the mobile merchant communication device 120 in encrypted form based on a public key of the mobile merchant communication device 120.

In an embodiment, the communication interface 123 is configured to receive the personalization data from the personalization server 140 in the encrypted form and wherein the security enclave 121a is configured to decrypt the personalization data.

In an embodiment, the processing circuitry 141 is further configured to digitally sign the personalization data using a private key of the personalization server 140.

In an embodiment, the security enclave 121a is further configured to verify a digital signature of the personalization data using a public key of the personalization server 140.

In an embodiment, the security enclave 121a is configured to generate the second electronic secret based on the first electronic secret.

In an embodiment, the second electronic secret is a public key of the mobile merchant communication device 120.

In an embodiment, the security enclave 121a is further configured to perform the payment transaction with the mobile consumer communication device 110 and the payment server 170 based on the personalization data.

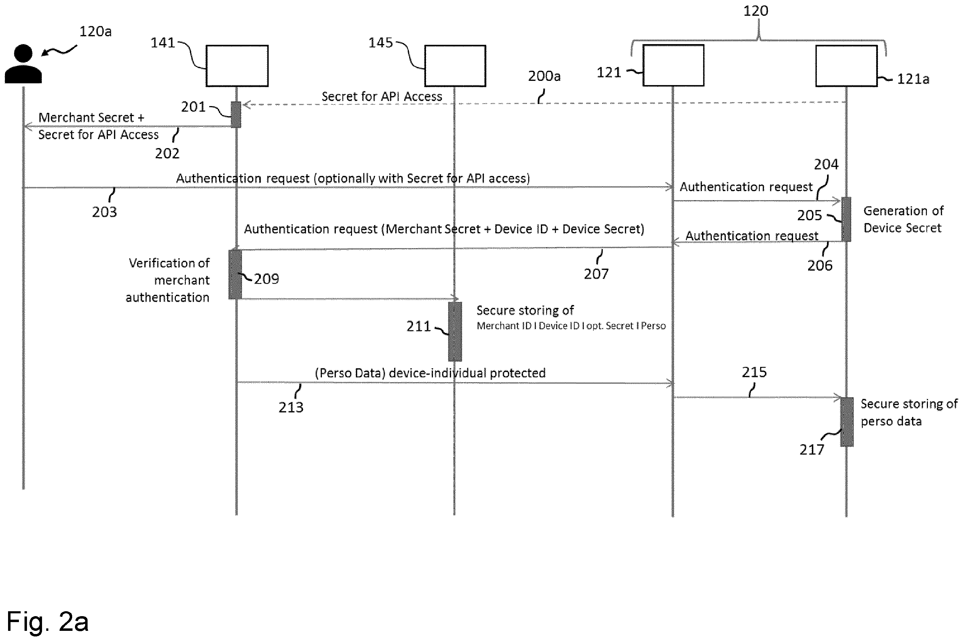

Figure 2a shows a signaling diagram illustrating the interaction of the mobile merchant communication device 120 and the personalization server 140 according to an embodiment for enrolling the mobile merchant communication device 120. In figure 2a the following steps are illustrated, some of which already have been described in the context of figure 1 above.

In step 200a of figure 2a, the security enclave 121a of the mobile merchant communication device 120 may generate a secret for accessing the user interface, in particular an API, of the mobile merchant communication device 120, which may then be transmitted to the processing circuitry 141 of the personalization server 140.

In step 201 of figure 2a, the processing circuitry 141 of the personalization server 140 generates the human-readable first secret for the merchant 120a, which may be associated with a merchant identifier.

In step 202 of figure 2a, the human-readable first secret, and in an embodiment additionally the secret for accessing the user interface of the mobile merchant communication device 120, is transmitted via a secure channel to the merchant 120a, for instance, electronically, such as by email or text message, and/or by paper letter and may be stored in the database of the memory 145 of the personalization server 140 together with the merchant identifier.

In step 203 of figure 2a, the merchant 120a, who has securely received the human-readable first secret, triggers the enrollment process by authenticating himself vis-à-vis the mobile merchant communication device 120, for instance, by manually entering the human-readable first secret, which may be a PIN, via a virtual keypad of the mobile merchant communication device 120. Additionally, the merchant 120a may be required to provide the secret for accessing the user interface of the mobile merchant communication device 120. This authentication request and the further enrollment process may be handled by an enrollment application running on the mobile merchant communication device 120.

In step 204 the processing circuitry 121 of the mobile merchant communication device 120 forwards the authentication request to the security enclave 121a.

In response to a successful authentication of the merchant 120a using the human-readable first secret, the security enclave 121a generates in step 205 of figure 2a the second electronic secret. In an embodiment, the security enclave 121a may generate the second electronic secret based on the first electronic secret. For instance, the first electronic secret may be a seed value for generating the second electronic secret.

In step 206 of figure 2a, the security enclave 121a of the mobile merchant communication device 120 initiates an enrollment request for the personalization server 140 and forwards the enrollment request to the processing circuitry 121 of the mobile merchant communication device 120. In addition to the first secret and the second secret the enrollment request may comprise a device identifier of the mobile merchant communication device 120, such as a hardware ID number.

In step 207 of figure 2a, the processing circuitry 121 of the mobile merchant communication device 120 sends the enrollment request to the personalization server 140 via the communication interface 123 in response to receiving the enrollment request from the security enclave 121a.

In step 209 of figure 2a, the processing circuitry 141 of the personalization server 140 is configured to verify whether the enrollment request contains the first secret, i.e. whether the mobile merchant communication device 120, i.e. the merchant 120a is authenticated by the first secret.

If the authentication in step 209 is successful, in step 211 of figure 2a the second secret may be stored together with the device identifier and personalization data in the database of the memory 145 of the personalization server 140. In an embodiment, the personalization data may be retrieved by the processing circuitry 141 from the memory 145 of the personalization server 140 and/or generated on the fly.

In step 213 of figure 2a, the personalization data is transmitted securely to the mobile merchant communication device 120. The personalization data enables the mobile merchant communication device 120 to perform a payment transaction with the mobile consumer communication device 110 and the payment server 170.

In step 215 of figure 2a, the personalization data is forwarded to the security enclave 121a by the processing circuitry 121 of the mobile merchant communication device 120.

In step 217 of figure 2a, the personalization data is securely stored by the security enclave 121a for being accessible for future payment transactions with the mobile consumer communication device 110 and the payment server 170.

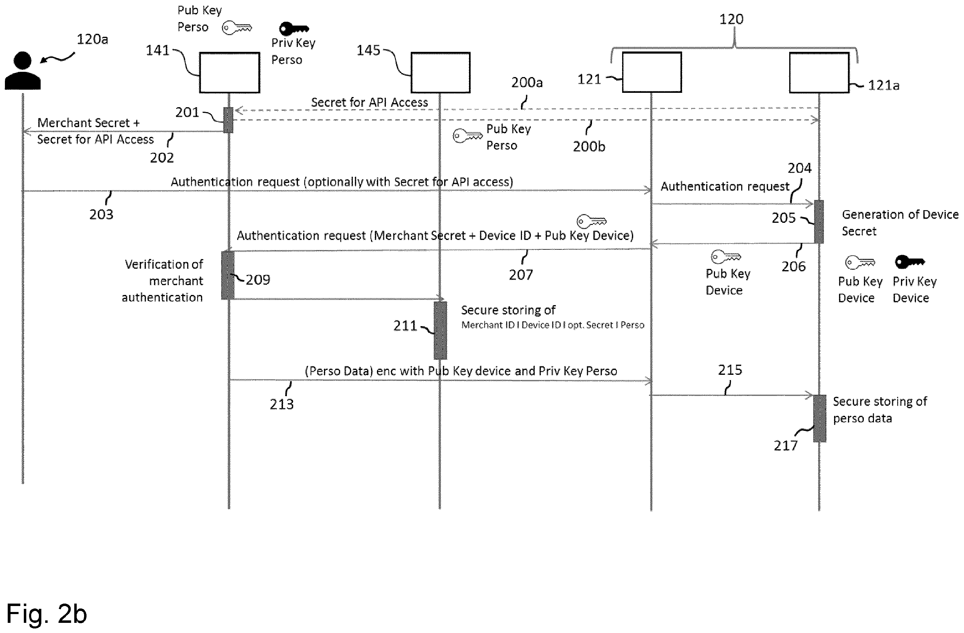

Figure 2b shows a signaling diagram illustrating a further embodiment of the interaction between the mobile merchant communication device 120 and the personalization server 140 shown in figure 2a for enrolling the mobile merchant communication device 120 based on asymmetric cryptography. To this end, as illustrated in figure 2b, both the personalization server 140 and the mobile merchant communication device 120 may comprise and/or generate a respective public and private key pair. In the following only the differences between the steps shown in figures 2a and 2b will be described in more detail.

In step 200b of figure 2b, via the communication interface 143 the processing circuitry 141 of the personalization server 140 transmits the public key of the personalization server 140 to the mobile merchant communication device 120, which may securely store the public key of the personalization server 140 using the security enclave 121a.

In step 205 of figure 2b, the mobile merchant communication device 120 generates or obtains a public private key pair, wherein the public key of the mobile merchant communication device 120 constitutes the second electronic secret.

In step 206 of figure 2b, the security enclave 121a of the mobile merchant communication device 120 initiates the enrollment request for the personalization server 140 and forwards the enrollment request to the processing circuitry 121 of the mobile merchant communication device 120. In this embodiment, the enrollment request comprises the public key of the mobile merchant communication device 120 as the second secret in addition to the first secret and the device identifier of the mobile merchant communication device 120. The security enclave 121a of the mobile merchant communication device 120 may encrypt this data using the public key of the personalization server 140.

In step 213 of figure 2b, the personalization data is transmitted securely from the personalization server 140 to the mobile merchant communication device 120. As illustrated in figure 2b, the personalization data, for instance, one or more symmetric payment keys, may be encrypted with the public key of the mobile merchant communication device 120 (which was part of the enrollment request in step 207) and digitally signed using the private key of the personalization server 140. These symmetric payment keys may be shared by the personalization server 140 with the payment server 170 so that the mobile merchant communication device 120 may use these keys for future payment transactions involving the mobile consumer communication device 110 and the payment server 170.

In step 215 of figure 2b, the processing circuitry 121 of the mobile merchant communication device 120 may forward the personalization data to the security enclave 121a.

In step 217 of figure 2b, the security enclave 121a securely stores the personalization data.

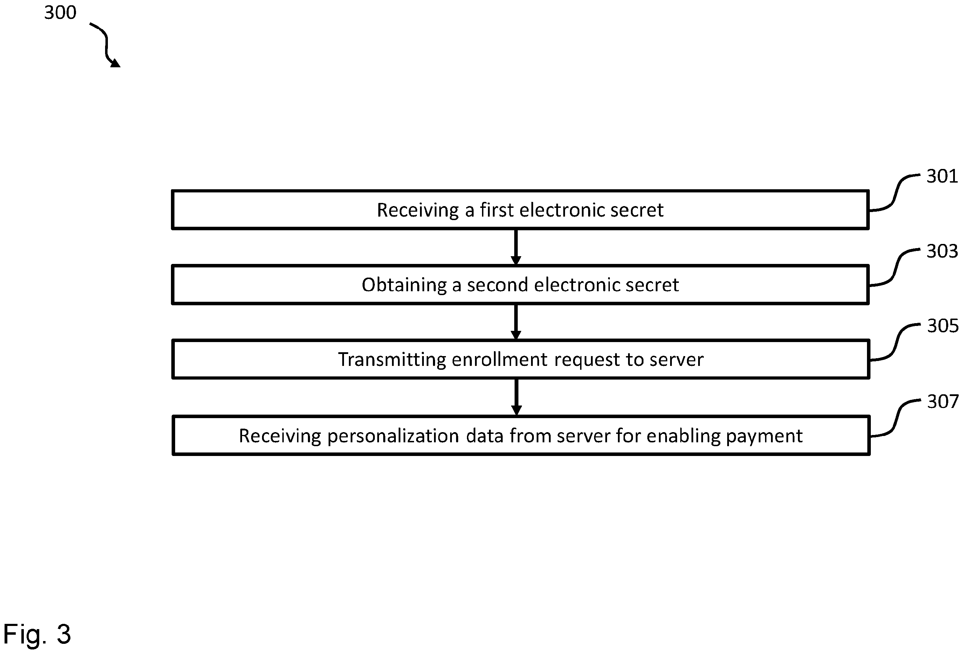

Figure 3 shows a flow diagram illustrating steps of a method 300 of enrolling a mobile merchant communication device 120 with a personalization server 140 for performing a payment transaction with a mobile consumer communication device 110. The method 300 comprises the steps of:
receiving 301 an authentication request from a merchant 120a, wherein the authentication request comprises a first electronic secret;
obtaining 303 by a security enclave 121a, in response to receiving the authentication request, a second electronic secret for the mobile merchant communication device 120; transmitting 305 an enrollment request to the personalization server 140, wherein the enrollment request comprises the first electronic secret and the second electronic secret; and
receiving 307, in response to transmitting the enrollment request, personalization data from the personalization server 140, wherein the personalization data enables the mobile merchant communication device 120 to perform the payment transaction with the mobile consumer communication device 110.

The method 300 can be performed by the mobile merchant communication device 120. Thus, further features of the method 300 result directly from the functionality of the mobile merchant communication device 120 as well as its different embodiments described above and below.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A mobile merchant communication device (120) configured to be enrolled by a personalization server (140) for performing a payment transaction with a mobile consumer communication device (110) using a payment server (170), wherein the mobile merchant communication device (120) comprises:
a user interface configured to receive an authentication request from a merchant (120a), wherein the authentication request comprises a first electronic secret;
a security enclave (121a) configured to, in response to the authentication request, obtain a second electronic secret for the mobile merchant communication device (120); and
a communication interface (123) configured to transmit an enrollment request to the personalization server (140), wherein the enrollment request comprises the first electronic secret and the second electronic secret;
wherein the communication interface (123) is further configured, in response to the enrollment request, to receive personalization data from the personalization server (140), wherein the personalization data enables the mobile merchant communication device (120) to perform the payment transaction with the mobile consumer communication device (110).

2. The mobile merchant communication device (120) of claim 1, wherein the security enclave (121a) comprises a hardware security enclave (121a) and/or a software security enclave (121a) implemented by a processing circuitry (121) of the mobile merchant communication device (120).

3. The mobile merchant communication device (120) of claim 1 or 2, wherein the security enclave (121a) is further configured to store the second electronic secret and/or the personalization data.

4. The mobile merchant communication device (120) of any one of the preceding claims, wherein the personalization data comprises one or more cryptographic keys for enabling the mobile merchant communication device (120) to perform the payment transaction with the mobile consumer communication device (110).

5. The mobile merchant communication device (120) of any one of the preceding claims, wherein the communication interface (123) is configured to receive the personalization data from the personalization server (140) in encrypted form and wherein the security enclave (121a) is configured to decrypt the personalization data.

6. The mobile merchant communication device (120) of any one of the preceding claims, wherein the security enclave (121a) is further configured to verify a digital signature of the personalization data using a public key of the personalization server (140).

7. The mobile merchant communication device (120) of any one of the preceding claims, wherein the first electronic secret is a human-readable PIN.

8. The mobile merchant communication device (120) of any one of the preceding claims, wherein the security enclave (121a) is configured to generate the second electronic secret based on the first electronic secret.

9. The mobile merchant communication device (120) of any one of the preceding claims, wherein the second electronic secret is a public key of the mobile merchant communication device (120).

10. The mobile merchant communication device (120) of any one of the preceding claims, wherein the security enclave (121a) is further configured to perform the payment transaction with the mobile consumer communication device (110) and the payment server (170) based on the personalization data.

11. An electronic payment system (100), comprising:
a mobile merchant communication device (120) according to any one of the preceding claims; and
a personalization server (140) configured to enroll the mobile merchant communication device (120) for performing a payment transaction with a mobile consumer communication device (110).

12. The electronic payment system (100) of claim 11, wherein the electronic payment system (100) further comprises a payment server (170), wherein the payment server (170) is configured to authorize the payment transaction between the mobile merchant communication device (120) and the mobile consumer communication device (110) based on the personalization data.

13. A method (300) of enrolling a mobile merchant communication device (120) with a personalization server (140) for performing a payment transaction with a mobile consumer communication device (110), wherein the method (300) comprises:
receiving (301) an authentication request from a merchant (120a), wherein the authentication request comprises a first electronic secret;
obtaining (303) by a security enclave (121a), in response to receiving the authentication request, a second electronic secret for the mobile merchant communication device (120);
transmitting (305) an enrollment request to the personalization server (140), wherein the enrollment request comprises the first electronic secret and the second electronic secret; and
receiving (307), in response to transmitting the enrollment request, personalization data from the personalization server (140), wherein the personalization data enables the mobile merchant communication device (120) to perform the payment transaction with the mobile consumer communication device (110).

14. The method of claim 13, wherein the method (300) further comprises performing the payment transaction with the mobile consumer communication device (110) and a payment server (170) based on the personalization data.

15. A computer program product comprising a computer-readable storage medium for storing program code which causes a computer or a processor to perform the method (300) of claim 13 or 14, when the program code is executed by the computer or the processor.

## Patentansprüche

1. Mobile Händlerkommunikationsvorrichtung (120), die ausgebildet ist, von einem Personalisierungsserver (140) zur Durchführung einer Zahlungstransaktion mit einer mobilen Verbraucherkommunikationsvorrichtung (110) unter Verwendung eines Zahlungsservers (170) registriert zu werden, wobei die mobile Händlerkommunikationsvorrichtung (120) umfasst:
eine Benutzerschnittstelle, die ausgebildet ist, eine Authentifizierungsanfrage von einem Händler (120a) zu empfangen, wobei die Authentifizierungsanfrage ein erstes elektronisches Geheimnis umfasst;
eine Sicherheitsenklave (121a), die ausgebildet ist, ansprechend auf die Authentifizierungsanfrage ein zweites elektronisches Geheimnis für die mobile Händlerkommunikationsvorrichtung (120) zu erhalten; und
eine Kommunikationsschnittstelle (123), die ausgebildet ist, eine Registrierungsanfrage an den Personalisierungsserver (140) zu übermitteln, wobei die Registrierungsanfrage das erste elektronische Geheimnis und das zweite elektronische Geheimnis umfasst;
wobei die Kommunikationsschnittstelle (123) ferner ausgebildet ist, ansprechend auf die Registrierungsanfrage Personalisierungsdaten von dem Personalisierungsserver (140) zu empfangen, wobei die Personalisierungsdaten die mobile Händlerkommunikationsvorrichtung (120) befähigen, die Zahlungstransaktion mit der mobilen Verbraucherkommunikationsvorrichtung (110) durchzuführen.

2. Mobile Händlerkommunikationsvorrichtung (120) nach Anspruch 1, wobei die Sicherheitsenklave (121a) eine Hardware-Sicherheitsenklave (121a) und/oder eine Software-Sicherheitsenklave (121a) umfasst, die durch eine Verarbeitungsschaltung (121) der mobilen Händlerkommunikationsvorrichtung (120) implementiert wird.

3. Mobile Händlerkommunikationsvorrichtung (120) nach Anspruch 1 oder 2, wobei die Sicherheitsenklave (121a) ferner ausgebildet ist, das zweite elektronische Geheimnis und/oder die Personalisierungsdaten zu speichern.

4. Mobile Händlerkommunikationsvorrichtung (120) nach einem der vorhergehenden Ansprüche, wobei die Personalisierungsdaten einen oder mehrere kryptografische Schlüssel umfassen, um die mobile Händlerkommunikationsvorrichtung (120) zur Durchführung der Zahlungstransaktion mit der mobilen Verbraucherkommunikationsvorrichtung (110) zu befähigen.

5. Mobile Händlerkommunikationsvorrichtung (120) nach einem der vorhergehenden Ansprüche, wobei die Kommunikationsschnittstelle (123) ausgebildet ist, die Personalisierungsdaten von dem Personalisierungsserver (140) in verschlüsselter Form zu empfangen, und wobei die Sicherheitsenklave (121a) ausgebildet ist, die Personalisierungsdaten zu entschlüsseln.

6. Mobile Händlerkommunikationsvorrichtung (120) nach einem der vorhergehenden Ansprüche, wobei die Sicherheitsenklave (121a) ferner ausgebildet ist, eine digitale Signatur der Personalisierungsdaten unter Verwendung eines öffentlichen Schlüssels des Personalisierungsservers (140) zu überprüfen.

7. Mobile Händlerkommunikationsvorrichtung (120) nach einem der vorhergehenden Ansprüche, wobei das erste elektronische Geheimnis eine für Menschen lesbare PIN ist.

8. Mobile Händlerkommunikationsvorrichtung (120) nach einem der vorhergehenden Ansprüche, wobei die Sicherheitsenklave (121a) ausgebildet ist, das zweite elektronische Geheimnis basierend auf dem ersten elektronischen Geheimnis zu erzeugen.

9. Mobile Händlerkommunikationsvorrichtung (120) nach einem der vorhergehenden Ansprüche, wobei das zweite elektronische Geheimnis ein öffentlicher Schlüssel der mobilen Händlerkommunikationsvorrichtung (120) ist.

10. Mobile Händlerkommunikationsvorrichtung (120) nach einem der vorhergehenden Ansprüche, wobei die Sicherheitsenklave (121a) ferner ausgebildet ist, die Zahlungstransaktion mit der mobilen Verbraucherkommunikationsvorrichtung (110) und dem Zahlungsserver (170) basierend auf den Personalisierungsdaten durchzuführen.

11. Elektronisches Zahlungssystem (100), umfassend:
eine mobile Händlerkommunikationsvorrichtung (120) nach einem der vorhergehenden Ansprüche; und
einen Personalisierungsserver (140), der ausgebildet ist, die mobile Händlerkommunikationsvorrichtung (120) für die Durchführung einer Zahlungstransaktion mit einer mobilen Verbraucherkommunikationsvorrichtung (110) zu registrieren.

12. Elektronische Zahlungssystem (100) nach Anspruch 11, wobei das elektronische Zahlungssystem (100) ferner einen Zahlungsserver (170) umfasst, wobei der Zahlungsserver (170) ausgebildet ist, die Zahlungstransaktion zwischen der mobilen Händlerkommunikationsvorrichtung (120) und der mobilen Verbraucherkommunikationsvorrichtung (110) basierend auf den Personalisierungsdaten zu autorisieren.

13. Verfahren (300) zum Registrieren einer mobilen Händlerkommunikationsvorrichtung (120) mit einem Personalisierungsserver (140) zum Durchführen einer Zahlungstransaktion mit einer mobilen Verbraucherkommunikationsvorrichtung (110), wobei das Verfahren (300) umfasst:
Empfangen (301) einer Authentifizierungsanfrage von einem Händler (120a), wobei die Authentifizierungsanfrage ein erstes elektronisches Geheimnis umfasst;
Erhalten (303) eines zweiten elektronischen Geheimnisses für die mobile Händlerkommunikationsvorrichtung (120) durch eine Sicherheitsenklave (121a) ansprechend auf den Empfang der Authentifizierungsanfrage;
Übermitteln (305) einer Registrierungsanfrage an den Personalisierungsserver (140), wobei die Registrierungsanfrage das erste elektronische Geheimnis und das zweite elektronische Geheimnis umfasst; und
Empfangen (307), ansprechend auf das Übermitteln der Registrierungsanfrage, von Personalisierungsdaten von dem Personalisierungsserver (140), wobei die Personalisierungsdaten die mobile Händlerkommunikationsvorrichtung (120) befähigen, die Zahlungstransaktion mit der mobilen Verbraucherkommunikationsvorrichtung (110) durchzuführen.

14. Verfahren nach Anspruch 13, wobei das Verfahren (300) ferner ein Durchführen der Zahlungstransaktion mit der mobilen Verbraucherkommunikationsvorrichtung (110) und einem Zahlungsserver (170) basierend auf den Personalisierungsdaten umfasst.

15. Computerprogrammprodukt, umfassend ein computerlesbares Speichermedium zum Speichern von Programmcode, der einen Computer oder einen Prozessor veranlasst, das Verfahren (300) nach Anspruch 13 oder 14 auszuführen, wenn der Programmcode von dem Computer oder dem Prozessor ausgeführt wird.

## Revendications

1. Dispositif de communication marchand mobile (120) configuré pour être inscrit par un serveur de personnalisation (140) pour effectuer une transaction de paiement avec un dispositif de communication mobile grand public (110) à l'aide d'un serveur de paiement (170), dans lequel le dispositif de communication marchand mobile (120) comprend :
une interface utilisateur configurée pour recevoir une demande d'authentification provenant d'un commerçant (120a), la demande d'authentification comprenant un premier secret électronique ;
une enclave de sécurité (121a) configurée pour, en réponse à la demande d'authentification, obtenir un deuxième secret électronique pour le dispositif de communication marchand mobile (120) ; et
une interface de communication (123) configurée pour transmettre une demande d'inscription au serveur de personnalisation (140), la demande d'inscription comprenant le premier secret électronique et le deuxième secret électronique ;
dans lequel l'interface de communication (123) est en outre configurée, en réponse à la demande d'inscription, pour recevoir des données de personnalisation du serveur de personnalisation (140), dans lequel les données de personnalisation permettent au dispositif de communication marchand mobile (120) d'effectuer la transaction de paiement avec le dispositif de communication mobile grand public (110).

2. Dispositif mobile de communication marchand (120) selon la revendication 1, dans lequel l'enclave de sécurité (121a) comprend une enclave de sécurité matérielle (121a) et/ou une enclave de sécurité logicielle (121a) mise en oeuvre par un circuit de traitement (121) du mobile dispositif de communication marchand (120).

3. Dispositif mobile de communication marchand (120) selon la revendication 1 ou 2, dans lequel l'enclave de sécurité (121a) est en outre configurée pour stocker le deuxième secret électronique et/ou les données de personnalisation.

4. Dispositif de communication marchand mobile (120) selon l'une quelconque des revendications précédentes, dans lequel les données de personnalisation comprennent une ou plusieurs clés cryptographiques pour permettre au dispositif de communication marchand mobile (120) d'effectuer la transaction de paiement avec le dispositif de communication mobile grand public (110) .

5. Dispositif mobile de communication marchand (120) selon l'une quelconque des revendications précédentes, dans lequel l'interface de communication (123) est configurée pour recevoir les données de personnalisation du serveur de personnalisation (140) sous forme cryptée et dans lequel l'enclave de sécurité (121a) est configuré pour décrypter les données de personnalisation.

6. Dispositif de communication marchand mobile (120) selon l'une quelconque des revendications précédentes, dans lequel l'enclave de sécurité (121a) est en outre configurée pour vérifier une signature numérique des données de personnalisation à l'aide d'une clé publique du serveur de personnalisation (140).

7. Dispositif de communication marchand mobile (120) selon l'une quelconque des revendications précédentes, dans lequel le premier secret électronique est un code PIN lisible par l'homme.

8. Dispositif de communication marchand mobile (120) selon l'une quelconque des revendications précédentes, dans lequel l'enclave de sécurité (121a) est configurée pour générer le deuxième secret électronique sur la base du premier secret électronique.

9. Dispositif mobile de communication marchand (120) selon l'une quelconque des revendications précédentes, dans lequel le deuxième secret électronique est une clé publique du dispositif mobile de communication marchand (120).

10. Dispositif de communication marchand mobile (120) selon l'une quelconque des revendications précédentes, dans lequel l'enclave de sécurité (121a) est en outre configurée pour effectuer la transaction de paiement avec le dispositif de communication mobile grand public (110) et le serveur de paiement (170) basé sur sur les données de personnalisation.

11. Système de paiement électronique (100), comprenant :
un dispositif de communication marchand mobile (120) selon l'une quelconque des revendications précédentes ; et
un serveur de personnalisation (140) configuré pour inscrire le dispositif de communication mobile marchand (120) afin d'effectuer une transaction de paiement avec un dispositif de communication mobile grand public (110).

12. Système de paiement électronique (100) selon la revendication 11, dans lequel le système de paiement électronique (100) comprend en outre un serveur de paiement (170), dans lequel le serveur de paiement (170) est configuré pour autoriser la transaction de paiement entre le dispositif de communication mobile du commerçant (120) et le dispositif de communication mobile grand public (110) sur la base des données de personnalisation.

13. Procédé (300) d'inscription d'un dispositif de communication marchand mobile (120) auprès d'un serveur de personnalisation (140) pour effectuer une transaction de paiement avec dispositif de communication mobile grand public (110), dans lequel le procédé (300) comprend :
recevoir (301) une demande d'authentification provenant d'un commerçant (120a), la demande d'authentification comprenant un premier secret électronique ;
obtenir (303) par une enclave de sécurité (121a), en réponse à la réception de la demande d'authentification, un deuxième secret électronique pour le dispositif de communication marchand mobile (120) ;
transmettre (305) une demande d'inscription au serveur de personnalisation (140), la demande d'inscription comprenant le premier secret électronique et le deuxième secret électronique ; et
recevoir (307), en réponse à la transmission de la demande d'inscription, des données de personnalisation provenant du serveur de personnalisation (140), les données de personnalisation permettant au dispositif de communication marchand mobile (120) d'effectuer la transaction de paiement avec le dispositif de communication mobile grand public (110).

14. Procédé selon la revendication 13, dans lequel le procédé (300) comprend en outre l'exécution de la transaction de paiement avec le dispositif de communication mobile grand public (110) et un serveur de paiement (170) sur la base des données de personnalisation.

15. Produit programme informatique comprenant un support de stockage lisible par ordinateur pour stocker un code de programme qui amène un ordinateur ou un processeur à exécuter le procédé (300) selon la revendication 13 ou 14, lorsque le code de programme est exécuté par l'ordinateur ou le processeur.
